# EUROPEAN PATENT APPLICATION

(11) **EP 4 738 832 A1**
(43) Date of publication of application: **06.05.2026**
(21) Application number: 24851695.7
(22) Date of filing: 31.07.2024
(51) Int. Cl.: H04N 19/85, H04N 19/30, H04N 19/70

(54) **DECODING DEVICE, ENCODING DEVICE, DECODING METHOD, AND ENCODING METHOD**

(30) Priority: 09.08.2023 US 202363531635 P
(71) Applicant: Panasonic Intellectual Property Corporation of America, Torrance, CA 90504 (US)
(72) Inventor: GAO, Jingying, Singapore 469332 (SG); TEO, Han Boon, Singapore 469332 (SG); LIM, Chong Soon, Singapore 469332 (SG); YADAV, Praveen Kumar, Singapore 469332 (SG); ABE, Kiyofumi, Kadoma-shi, Osaka 571-0057 (JP); NISHI, Takahiro, Kadoma-shi, Osaka 571-0057 (JP); SUGIO, Toshiyasu, Kadoma-shi, Osaka 571-0057 (JP)
(74) Representative: Grünecker Patent- und Rechtsanwälte PartG mbB
(86) International application number: PCT/JP2024/027258
(87) International publication number: WO 2025/033270

(57) **Abstract**

A decoder includes circuitry, and a memory connected to the circuitry. The circuitry decodes, from a bitstream having a multi-layer structure including at least one image layer, at least one parameter associated with the image layer, and the parameter indicates whether or not an image decoded from an image layer associated with the parameter is suitable for a specific task processing.

## Description

### Technical Field

The present disclosure relates to a decoder, an encoder, a decoding method, and an encoding method.

### Background Art

Patent Literature 1 discloses a video encoding method and a decoding method using an adaptive coupled prefilter and an adaptive coupled postfilter.
Patent Literature 2 discloses a method of encoding image data for loading into an artificial intelligence (AI) integrated circuit.

However, in Patent Literatures 1 and 2, in an image processing system that transmits a bitstream having a multi-layer structure from an encoder to a decoder, reducing a processing load on the decoder is not sufficiently studied.

### Citation List

### Patent Literature

Patent Literature 1: US 9,883,207
Patent Literature 2: US 10,452,955

### Summary of Invention

An object of the present disclosure is to reduce a processing load on a decoder in an image processing system that transmits a bitstream having a multi-layer structure from an encoder to the decoder.

A decoder according to one aspect of the present disclosure includes circuitry, and a memory coupled to the circuitry. The circuitry decodes, from a bitstream having a multi-layer structure including at least one image layer, at least one parameter associated with the image layer, and the parameter indicates whether or not an image decoded from an image layer associated with the parameter is suitable for a specific task processing.

### Brief Description of Drawings

FIG. 1 is a diagram illustrating, in a simplified manner, a configuration of an image processing system according to an embodiment of the present disclosure.
FIG. 2 is a diagram illustrating, in a simplified manner, a configuration of circuitry included in an encoder.
FIG. 3 is a flowchart showing processing executed by the circuitry included in the encoder.
FIG. 4 is a diagram illustrating, in a simplified manner, a part of a bitstream having a multi-layer structure.
FIG. 5 is a diagram illustrating a setting example of a parameter by a setting unit.
FIG. 6A is a diagram illustrating a first example of syntax related to setting of a parameter.
FIG. 6B is a diagram illustrating a second example of syntax related to setting of a parameter.
FIG. 7 is a diagram illustrating, in a simplified manner, a configuration of circuitry included in a decoder.
FIG. 8 is a flowchart showing processing executed by the circuitry included in the decoder.
FIG. 9 is a diagram illustrating, in a simplified manner, a part of a bitstream having a multi-layer structure.
FIG. 10 is a diagram illustrating a setting example of a parameter by the setting unit.
FIG. 11 is a diagram illustrating an example of syntax related to setting of a parameter.
FIG. 12 is a diagram illustrating a first setting example of a parameter by the setting unit.
FIG. 13 is a diagram illustrating a second setting example of a parameter by the setting unit.
FIG. 14A is a diagram illustrating a processing example in the decoder.
FIG. 14B is a diagram illustrating a processing example in the decoder.
FIG. 14C is a diagram illustrating a processing example in the decoder.
FIG. 14D is a diagram illustrating a processing example in the decoder.
FIG. 14E is a diagram illustrating a processing example in the decoder.
FIG. 15 is a diagram illustrating, in a simplified manner, a part of a bitstream having a multi-layer structure.
FIG. 16 is a diagram illustrating an example of syntax related to setting of a parameter.
FIG. 17 is a block diagram illustrating an example of a functional configuration of an encoding unit.
FIG. 18 is a block diagram illustrating an example of a functional configuration of a decoding unit.
FIG. 19 is a diagram illustrating an example of a hierarchical structure of data in a stream.
FIG. 20 is a diagram illustrating a configuration example of a bitstream.

### Description of Embodiments

### (Knowledge underlying present disclosure)

An image processing system according to the background art includes an encoder and a decoder. The encoder encodes an image into a bitstream, and transmits the bitstream storing the encoded image to the decoder. The decoder decodes an image from a received bitstream, and executes task processing by using the decoded image.

The task processing includes machine vision and human vision. The machine vision includes object detection, object tracking, object segmentation, action recognition, pose estimation, or the like using a machine-learned estimation model. The human vision includes visual recognition or viewing and listening of a moving image by a human, such as an operator or the user.

In a case where a bitstream has a multi-layer structure including a plurality of image layers, different images are stored in the plurality of image layers. Then, a suitable image layer including an image to be used for task processing is different depending on content of the task processing. However, in the background art, there is no information indicating a correspondence relationship between content of task processing and a suitable image layer. Therefore, a decoder decodes all image layers including an unsuitable image layer, and therefore a processing load on the decoder is large.

In order to solve such a problem, the present inventor has found that unnecessary decoding in a decoder can be avoided by including, in a bitstream, information indicating whether or not an image decoded from an image layer is suitable for task processing and transmitting the information from an encoder to the decoder, and by this, the above problem can be solved, and has arrived at the present disclosure.

Next, each aspect of the present disclosure will be described.

A decoder according to a first aspect of the present disclosure includes circuitry, and a memory connected to the circuitry, in which the circuitry decodes, from a bitstream having a multi-layer structure including at least one image layer, at least one parameter associated with the image layer, and the parameter indicates whether or not an image decoded from an image layer associated with the parameter is suitable for predetermined task processing.

According to the first aspect, since the decoder can avoid unnecessary decoding based on a parameter, it is possible to reduce a processing load on the decoder and improve processing efficiency.

In the decoder according to a second aspect of the present disclosure, in the first aspect, the circuitry preferably further decodes an image from an image layer selected based on the parameter from the at least one image layer, and executes the task processing by using the image decoded from the image layer.

According to a second aspect, the decoder can appropriately execute task processing by using an image suitable for the task processing.

In the decoder according to a third aspect of the present disclosure, in the first or second aspect, the task processing preferably includes machine vision.

According to the third aspect, the decoder can appropriately execute machine vision by using an image suitable for machine vision.

In the decoder according to a fourth aspect of the present disclosure, in any one of the first to third aspects, the task processing preferably includes human vision.

According to a fourth aspect, the decoder can appropriately execute human vision by using an image suitable for human vision.

In a decoder according to a fifth aspect of the present disclosure, in any one of the first to fourth aspects, the task processing preferably includes machine vision and human vision, and the at least one parameter preferably includes a first parameter indicating whether or not an image decoded from the image layer is suitable for the machine vision, and a second parameter indicating whether or not an image decoded from the image layer is suitable for the human vision.

According to the fifth aspect, the decoder can appropriately execute machine vision by using an image suitable for machine vision, and can appropriately execute human vision by using an image suitable for human vision.

In the decoder according to a sixth aspect of the present disclosure, in any one of the first to fifth aspects, the parameter preferably includes a first value and a second value, the first value preferably indicates that an image decoded from the image layer is suitable for the task processing, and the second value preferably indicates that an image decoded from the image layer is not suitable for the task processing.

According to the sixth aspect, it is possible to prevent the decoder from decoding an image that is not suitable for task processing.

In the decoder according to a seventh aspect of the present disclosure, in any one of the first to fifth aspects, the parameter preferably includes a first value and a second value, the first value preferably indicates that an image decoded from the image layer is suitable for the task processing, and the second value preferably indicates that whether or not an image decoded from the image layer is suitable for the task processing is not specified.

According to the seventh aspect, the decoder can optionally determine whether or not to decode an image from an image layer associated with a parameter indicating the second value according to a status of a processing load or the like.

In the decoder according to an eighth aspect of the present disclosure, in the sixth or seventh aspect, the circuitry preferably further decodes an image from only an image layer associated with the parameter indicating the first value among the at least one image layer, and executes the task processing by using the image decoded from the image layer.

According to the eighth aspect, since the decoder decodes an image only from an image layer associated with a parameter indicating the first value, a processing load on the decoder can be further reduced.

In the decoder according to a ninth aspect of the present disclosure, in any one of the first to eighth aspects, the at least one image layer preferably includes an image layer with which the parameter is not associated, and that the parameter is not associated with the image layer preferably indicates that whether or not an image decoded from the image layer is suitable for the task processing is not specified.

According to the ninth aspect, the decoder can optionally determine whether or not to decode an image from an image layer with which no parameter is associated according to a status of a processing load or the like.

In the decoder according to a tenth aspect of the present disclosure, in any one of the first to ninth aspects, the circuitry preferably decodes the at least one parameter from a predetermined header region of the bitstream, and the predetermined header region preferably includes SEI.

According to the tenth aspect, the decoder can easily decode a parameter from a predetermined header region in a bitstream.

In the decoder according to an eleventh aspect of the present disclosure, in the tenth aspect, the at least one image layer preferably includes a base layer that is a lowermost layer of the multi-layer structure, and the at least one parameter associated with the at least one image layer is preferably stored in the header region of the base layer.

According to the eleventh aspect, the decoder can collectively acquire all parameters associated with all image layers from a header region of a base layer.

In the decoder according to a twelfth aspect of the present disclosure, in the tenth aspect, the at least one parameter associated with the at least one image layer is preferably stored in the header region of each of the at least one image layer.

According to the twelfth aspect, the decoder can individually acquire each parameter associated with each image layer from a header region of each image layer.

An encoder according to a thirteenth aspect of the present disclosure includes circuitry, and a memory connected to the circuitry, in which the circuitry encodes, into a bitstream having a multi-layer structure including at least one image layer, at least one parameter associated with the image layer, and the parameter indicates whether or not an image in an image layer associated with the parameter is suitable for predetermined task processing.

According to the thirteenth aspect, since the decoder that receives a bitstream can avoid unnecessary decoding based on a parameter, it is possible to reduce a processing load on the decoder and improve processing efficiency.

In the encoder according to a fourteenth aspect of the present disclosure, in the thirteenth aspect, the task processing preferably includes machine vision.

According to the fourteenth aspect, the decoder that receives a bitstream can appropriately execute machine vision by using an image suitable for machine vision.

In the encoder according to a fifteenth aspect of the present disclosure, in the thirteenth or fourteenth aspect, the task processing preferably includes human vision.

According to the fifteenth aspect, the decoder that receives a bitstream can appropriately execute human vision by using an image suitable for human vision.

In the encoder according to a sixteenth aspect of the present disclosure, in any one of the thirteenth to fifteenth aspects, the task processing preferably includes machine vision and human vision, and the at least one parameter preferably includes a first parameter indicating whether or not an image in the image layer is suitable for the machine vision, and a second parameter indicating whether or not an image in the image layer is suitable for the human vision.

According to the sixteenth aspect, the decoder that receives a bitstream can appropriately execute machine vision by using an image suitable for machine vision, and can appropriately execute human vision by using an image suitable for human vision.

In the encoder according to a seventeenth aspect of the present disclosure, in any one of the thirteenth to sixteenth aspects, the parameter preferably includes a first value and a second value, the first value preferably indicates that an image in the image layer is suitable for the task processing, and the second value preferably indicates that an image in the image layer is not suitable for the task processing.

According to the seventeenth aspect, it is possible to prevent the decoder that receives a bitstream from decoding an image that is not suitable for task processing.

In the encoder according to an eighteenth aspect of the present disclosure, in any one of the thirteenth to sixteenth aspects, the parameter preferably includes a first value and a second value, the first value preferably indicates that an image in the image layer is suitable for the task processing, and the second value preferably indicates that whether or not an image in the image layer is suitable for the task processing is not specified.

According to the eighteenth aspect, whether or not to decode an image from an image layer associated with a parameter indicating the second value can be optionally determined according to a status of a processing load or the like by the decoder that receives a bitstream.

In the encoder according to a nineteenth aspect of the present disclosure, in any one of the thirteenth to eighteenth aspects, the at least one image layer preferably includes an image layer with which the parameter is not associated, and that the parameter is not associated with the image layer preferably indicates that whether or not an image in the image layer is suitable for the task processing is not specified.

According to the nineteenth aspect, whether or not to decode an image from an image layer not associated with a parameter can be optionally determined according to a status of a processing load or the like by the decoder that receives a bitstream.

In the encoder according to a twentieth aspect of the present disclosure, in any one of the thirteenth to nineteenth aspects, the circuitry preferably encodes the at least one parameter into a predetermined header region of the bitstream, and the predetermined header region preferably includes SEI.

According to the twentieth aspect, the decoder that receives a bitstream can easily decode a parameter from a predetermined header region in a bitstream.

In the encoder according to a twenty-first aspect of the present disclosure, in the twentieth aspect, the at least one image layer preferably includes a base layer that is a lowermost layer of the multi-layer structure, and the at least one parameter associated with the at least one image layer is preferably stored in the header region of the base layer.

According to the twenty-first aspect, the decoder that receives a bitstream can collectively acquire all parameters associated with all image layers from a header region of a base layer.

In the encoder according to a twenty-second aspect of the present disclosure, in the twentieth aspect, the at least one parameter associated with the at least one image layer is preferably stored in the header region of each of the at least one image layer.

According to the twenty-second aspect, the decoder that receives a bitstream can individually acquire each parameter associated with each image layer from a header region of each image layer.

A decoding method performed by a decoder according to a twenty-third aspect of the present disclosure includes decoding, from a bitstream having a multi-layer structure including at least one image layer, at least one parameter associated with the image layer, and the parameter indicates whether or not an image decoded from an image layer associated with the parameter is suitable for predetermined task processing.

According to the twenty-third aspect, since the decoder can avoid unnecessary decoding based on a parameter, it is possible to reduce a processing load on the decoder and improve processing efficiency.

An encoding method performed by an encoder according to a twenty-fourth aspect of the present disclosure includes encoding, into a bitstream having a multi-layer structure including at least one image layer, at least one parameter associated with the image layer, and the parameter indicates whether or not an image in an image layer associated with the parameter is suitable for predetermined task processing.

According to the twenty-fourth aspect, since the decoder that receives a bitstream can avoid unnecessary decoding based on a parameter, it is possible to reduce a processing load on the decoder and improve processing efficiency.

### (Embodiment of present disclosure)

An embodiment of the present disclosure will be described below in detail with reference to the drawings. Note that elements denoted by the same reference signs in different drawings represent the same or corresponding elements.

Note that each embodiment described below shows one specific example of the present disclosure. A numerical value, shape, component, step, orders of the steps, and the like of the following embodiment are merely examples, and are not intended to limit the present disclosure. A component not described in an independent claim representing the highest concept among components in the following embodiment is described as an optional component. Further, in all the embodiments, contents can be replaced or combined. Note that these general or specific aspects may be achieved by means of a system, a method, an integrated circuit, a computer program, or a computer-readable recording medium such as a CD-ROM, or may be achieved by an optional combination of the system, the method, the integrated circuit, the computer program, and the recording medium.

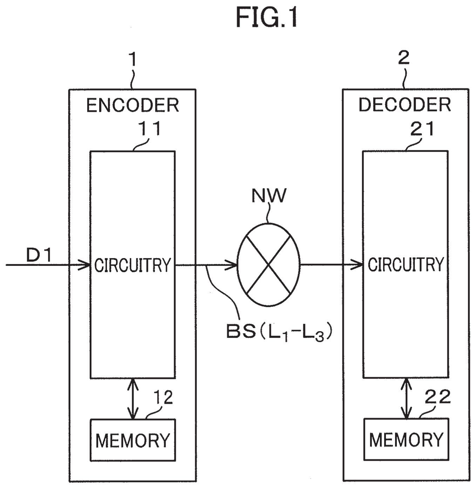

FIG. 1 is a diagram illustrating, in a simplified manner, a configuration of an image processing system according to an embodiment of the present disclosure. The image processing system includes an encoder 1, a decoder 2, and a transmission path NW.

The encoder 1 receives image data D1 input from an external device. Examples of the external device include a camera that captures a moving image. The external device inputs, to the encoder 1, the image data D1 of a captured moving image.

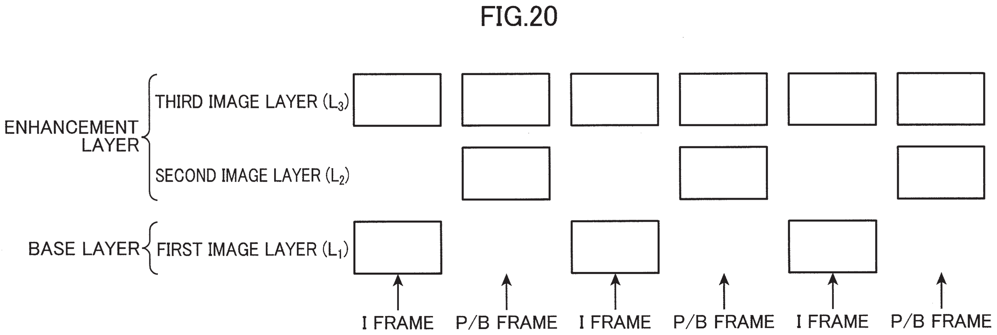

The encoder 1 generates a bitstream BS based on the image data D1. FIG. 20 is a diagram illustrating a configuration example of the bitstream BS. The bitstream BS has a multi-layer structure including at least one image layer L. In an example of the present embodiment, the bitstream BS has a three-layer multi-layer structure. However, the present invention is not limited to this example. The three-layer multi-layer structure includes a first image layer L₁ which is a base layer of the lowest layer, and a second image layer L₂ and a third image layer L₃ which are enhancement layers of an upper layer.

For example, the first image layer L₁ includes image data of an I frame in a Region Of Interest (ROI) region. The ROI region corresponds to an object or the like included in an image. Further, the second image layer L₂ includes image data of a P frame and a B frame in the ROI region. Further, the third image layer L₃ includes image data of a background region excluding the ROI region. By the above, a low-quality image of the ROI region is obtained by the first image layer L₁. Further, a high-quality image of the ROI region can be obtained by the first image layer L₁ and the second image layer L₂. Further, a complete image including the ROI region and the background region is obtained by the first image layer L₁, the second image layer L₂, and the third image layer L₃. Note that an example of the multi-layer structure is not limited to the above example.

The encoder 1 transmits the generated bitstream BS to the decoder 2 via the transmission path NW. The decoder 2 receives the bitstream BS.

The decoder 2 acquires an image from the bitstream BS by decoding, and executes task processing based on the acquired image. The processing of acquiring an image from a bitstream may be rephrased as extracting or decoding. The task processing includes machine vision and human vision. The machine vision includes object detection, object tracking, object segmentation, action recognition, pose estimation, and the like with use of an artificial intelligence (AI) model as a machine-learned estimation model. In a case where machine vision is executed, a task processor includes an inference unit using AI. The human vision includes visual recognition or viewing and listening of a moving image by a human, such as an operator or the user. In a case where the human vision is executed, the task processor includes a display device such as a liquid crystal display or an organic EL display.

The transmission path NW is the Internet, a wide area network (WAN), a local area network (LAN), or an optional combination of these. The transmission path NW is desirably a private network or the like in which secure communication is ensured by access restriction.

The encoder 1 includes circuitry 11 and a memory 12 connected to the circuitry 11. The circuitry 11 includes a processor such as a CPU. The memory 12 includes any recording medium such as a ROM, a RAM, an HDD, an SSD, or a semiconductor memory. The memory 12 stores data to be processed or data being processed by the circuitry 11, and the like.

The decoder 2 includes circuitry 21 and a memory 22 connected to the circuitry 21. The circuitry 21 includes a processor such as a CPU. The memory 22 includes any recording medium such as a ROM, a RAM, an HDD, an SSD, or a semiconductor memory. The memory 22 stores data to be processed or data being processed by the circuitry 21, and the like.

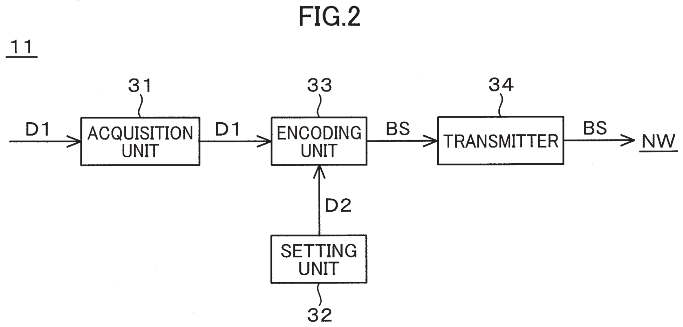

FIG. 2 is a diagram illustrating, in a simplified manner, a configuration of the circuitry 11 included in the encoder 1. The circuitry 11 includes an acquisition unit 31, a setting unit 32, an encoding unit 33, and a transmitter 34.

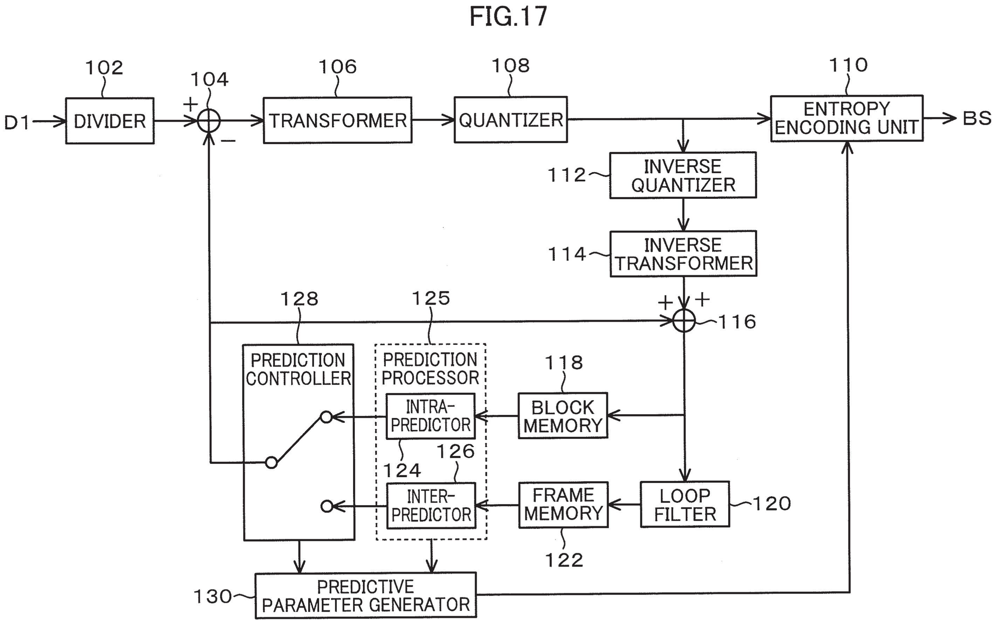

Next, description is made on the encoding unit 33 according to the present embodiment. FIG. 17 is a block diagram illustrating an example of a functional configuration of the encoding unit 33 according to the present embodiment. The encoding unit 33 encodes an image in block units.

As shown in FIG. 17, the encoding unit 33 includes a divider 102, a subtractor 104, a transformer 106, a quantizer 108, an entropy encoding unit 110, an inverse quantizer 112, an inverse transformer 114, an adder 116, a block memory 118, a loop filter 120, a frame memory 122, an intra-predictor 124, an inter-predictor 126, a prediction controller 128, and a predictive parameter generator 130. Note that the intra-predictor 124 and the inter-predictor 126 constitute part of a prediction processor 125.

For example, a plurality of components included in the encoding unit 33 shown in FIG. 17 are implemented by the circuitry 11 and the memory 12 shown in FIG. 1.

The circuitry 11 includes a processor such as a CPU. The circuitry 11 may be a dedicated or general-purpose electronic circuit that encodes an image, or an assembly of a plurality of electronic circuits. Further, for example, the circuitry 11 may function as a plurality of components except for a component for information storage, out of a plurality of components included in the encoding unit 33 shown in FIG. 17.

The memory 12 may be a dedicated or general-purpose electronic circuit that stores information, or an assembly of a plurality of electronic circuits. The memory 12 may be externally connected to the circuitry 11 or may be incorporated in the circuitry 11. The memory 12 may be a magnetic disk, an optical disk, or the like, or may be expressed as a storage, a recording medium, or the like. The memory 12 may be a nonvolatile memory or a volatile memory.

The memory 12 may store an image to be encoded, or a stream corresponding to an encoded image. Further, the memory 12 may store a program for a processor to execute image encoding processing.

Further, the memory 12 may function as a component for information storage, out of a plurality of components included in the encoding unit 33 shown in FIG. 29. Specifically, the memory 12 may function as the block memory 118 and the frame memory 122 shown in FIG. 17. More specifically, the memory 12 may store a reconstructed image (specifically, a reconstructed block, a reconstructed picture, or the like).

Note that in the encoding unit 33, a part of the plurality of components shown in FIG. 17 may be omitted, and execution of a part of a plurality of types of processing executed by the plurality of components may be omitted. Alternatively, a part of the plurality of components shown in FIG. 17 may be mounted on a different device, and a part of a plurality of types of processing executed by the plurality of components may be executed by a different device.

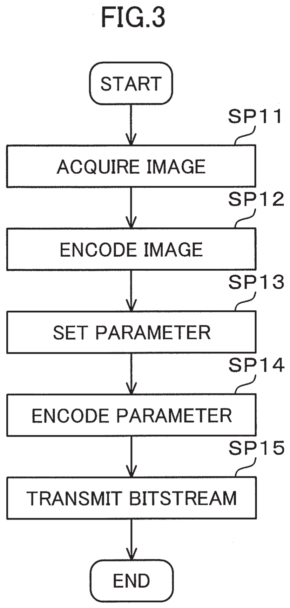

FIG. 3 is a flowchart showing processing executed by the circuitry 11 included in the encoder 1.

Initially in Step SP11, the acquisition unit 31 acquires the image data D1 indicating an image X as a processing target received from an external device. The acquisition unit 31 inputs the image data D1 to the encoding unit 33.

Next, in Step SP12, the encoding unit 33 encodes the image X into the bitstream BS. In the example of the present embodiment, the image X includes an image X₁ corresponding to the first image layer L₁, an image X₂ corresponding to the second image layer L₂, and an image X₃ corresponding to the third image layer L₃.

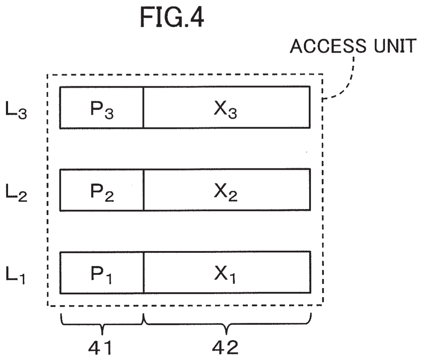

FIG. 4 is a diagram illustrating, in a simplified manner, a part of the bitstream BS having a multi-layer structure. FIG. 4 illustrates only one access unit. The access unit is a minimum processing unit of a temporal attribute, and corresponds to, for example, one frame of a moving image. The bitstream BS includes a plurality of temporally continuous access units.

Each of the image layers L has a header region 41 and a payload region 42. The encoding unit 33 stores an encoded image obtained by encoding the image X₁ in the payload region 42 of the first image layer L₁. Further, the encoding unit 33 stores an encoded image obtained by encoding the image X₂ in the payload region 42 of the second image layer L₂. Further, the encoding unit 33 stores an encoded image obtained by encoding the image X₃ in the payload region 42 of the third image layer L₃.

Referring to FIG. 3, next, in Step SP13, the setting unit 32 sets a parameter P in association with the image layer L. The parameter P indicates whether or not the image X encoded into the image layer L associated with the parameter P is suitable for predetermined task processing. Any predetermined task processing is set by the setting unit 32 from machine vision and human vision. In the example of the present embodiment, the predetermined task processing is object tracking that is one process of machine vision. However, the present disclosure is not limited to this example. Setting information of the predetermined task processing may be shared in advance by the encoder 1 and the decoder 2, or may be included in the bitstream BS and transmitted from the encoder 1 to the decoder 2.

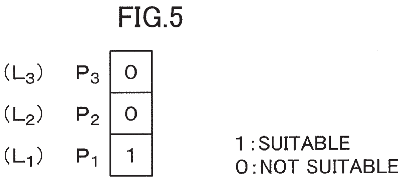

FIG. 5 is a diagram illustrating an example of setting the parameter P by the setting unit 32. In the example of the present embodiment, the parameter P includes parameters P₁ to P₃. The setting unit 32 sets the parameter P₁ in association with the first image layer L₁, sets the parameter P₂ in association with the second image layer L₂, and sets the parameter P₃ in association with the third image layer L₃.

The setting unit 32 sets values of the parameters P₁ to P₃ to "1" (first value) or "0" (second value). The value "1" of the parameter P indicates that the image X encoded into the image layer L is suitable for the predetermined task processing (object tracking). That an image is suitable for task processing means that the image is encoded as an image suitable for task processing. The value "0" of the parameter P indicates that the image X encoded into the image layer L is not suitable for the predetermined task processing (object tracking). That an image is not suitable for task processing means that the image is not encoded as an image suitable for task processing.

According to the example illustrated in FIG. 5, the setting unit 32 sets the values of the parameters P₁, P₂, and P₃ to "1", "0", and "0", respectively. In this setting example, it is meant that the image X₁ is suitable for object tracking, and the images X₂ and X₃ are not suitable for object tracking. The setting unit 32 inputs data D2 including a setting value of the parameter P to the encoding unit 33.

Referring to FIG. 3, next, in Step SP14, the encoding unit 33 encodes the parameter P into the bitstream BS. Here, the processing of encoding a parameter into a bitstream may be rephrased as saving or storing.

Referring to FIG. 4, the encoding unit 33 encodes the parameter P₁ in the header region 41 of the first image layer L₁. Further, the encoding unit 33 encodes the parameter P₂ in the header region 41 of the second image layer L₂. Further, the encoding unit 33 encodes the parameter P₃ in the header region 41 of the third image layer L₃. The parameter P is stored in a predetermined region of the header region 41. The predetermined region is Supplemental Enhancement Information (SEI). However, the predetermined region may be Video Usability Information (VUI), VPS, SPS, PPS, PH, SH, APS, a tile header, a system layer header, or the like.

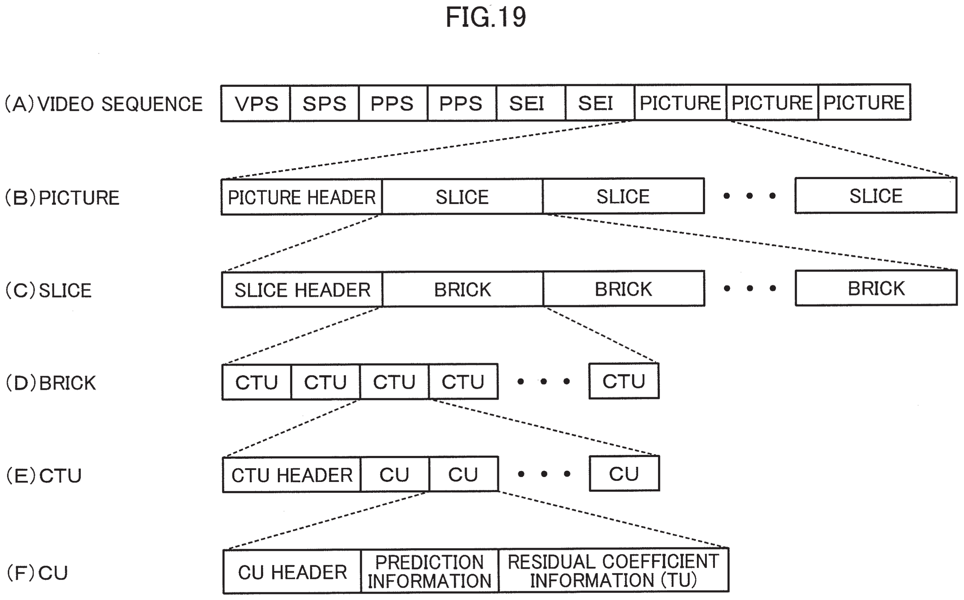

FIG. 19 is a diagram illustrating one example of a data hierarchical structure in a stream. The stream includes a video sequence, for example. As shown in (A) in FIG. 19, the video sequence includes, for example, a Video Parameter Set (VPS), a Sequence Parameter Set (SPS), a Picture Parameter Set (PPS), Supplemental Enhancement Information (SEI), and a plurality of pictures.

The VPS includes, in a moving image constituted by a plurality of layers, an encoded parameter common to the plurality of layers, and an encoded parameter associated with the plurality of layers or an individual layer included in the moving image.

The SPS includes a parameter used for a sequence, that is, an encoded parameter to be referred to by the decoder 2 for decoding of the sequence. The encoded parameter may indicate, for example, a width or a height of a picture. Note that a plurality of SPSs may be present.

The PPS includes a parameter used for a picture, that is, an encoded parameter to be referred to by the decoder 2 for decoding of each picture in a sequence. The encoded parameter may include, for example, a reference value of a quantization width to be used for picture decoding, and a flag indicating application of weighted prediction. Note that a plurality of PPSs may be present. The SPS and the PPS may simply be called a parameter set.

As shown in (B) in FIG. 19, a picture contains a picture header and one or more slices. The picture header contains an encoded parameter to be referred to by the decoder 2 for decoding of the one or more slices.

As shown in (C) in FIG. 19, the slice includes a slice header and one or more bricks. The slice header includes an encoded parameter to be referred to by the decoder 2 for decoding of the one or more bricks.

As shown in (D) in FIG. 19, the brick includes one or more Coding Tree Units (CTUs).

Note that the picture may contain no slice, and may contain a tile group instead of the slice. In this case, the tile group includes one or more tiles. Further, the brick may include a slice.

The CTU is also called a super block or a basic division unit. As shown in (E) in FIG. 19, the CTU contains a CTU header and one or more Coding Units (CUs). The CTU header includes an encoded parameter to be referred to by the decoder 2 for decoding of the one or more CUs.

The CU may be divided into a plurality of small CUs. Further, as shown in (F) in FIG. 19, the CU contains a CU header, prediction information, and residual coefficient information. The prediction information is information for prediction of a CU. The residual coefficient information is information indicating a prediction residual. Note that the CU is basically identical to a Prediction Unit (PU) or a Transform Unit (TU), but may include a plurality of TUs smaller than the CU. Further, the CU may be processed for each of Virtual Pipeline Decoding Units (VPDUs) constituting the CU. The VPDU is, for example, a fixed unit processible at one stage upon pipeline processing in hardware.

Note that the stream does not necessarily contain part of the plurality of hierarchical layers shown in FIG. 19. Further, these hierarchical layers may be changed in terms of their order, and any of the hierarchical layers may be replaced with another hierarchical layer.

A picture as a target of processing executed by a device such as the encoder 1 or the decoder 2 at a current time point is referred to as a current picture. The current picture has the same meaning as an encoding target picture when the processing is encoding, and the current picture has the same meaning as a decoding target picture when the processing is decoding. Further, a block (a CU or a block of a CU) as a target of processing executed by a device such as the encoder 1 or the decoder 2 at a current time point is referred to as a current block. The current block has the same meaning as an encoding target block when the processing is encoding, and the current block has the same meaning as a decoding target block when the processing is decoding.

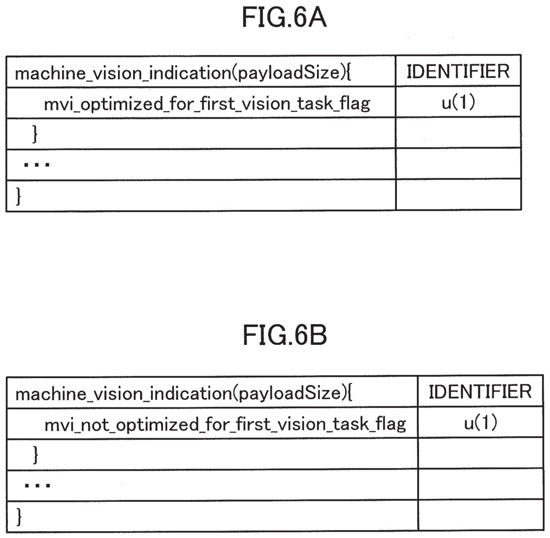

FIG. 6A is a diagram illustrating a first example of syntax related to setting of the parameter P. In this example, the parameter P is set as a value of mvi optimized_for_first_vision_task_flag included in an SEI message such as machine_vision_indication. In a case where a value of an identifier of the flag is "1", it indicates that the image X encoded into the image layer L associated with the parameter P is suitable for task processing. In a case where the value of the identifier of the flag is "0", it indicates that the image X encoded into the image layer L associated with the parameter P is not suitable for task processing.

FIG. 6B is a diagram illustrating a second example of syntax related to setting of the parameter P. In this example, the parameter P is set as a value of mvi_not_optimized_for_first_vision_task_flag included in an SEI message such as machine _vision_indication. In a case where a value of an identifier of the flag is "1", it indicates that the image X encoded into the image layer L associated with the parameter P is not suitable for task processing. In a case where the value of the identifier of the flag is "0", it indicates that the image X encoded into the image layer L associated with the parameter P is suitable for task processing.

Referring to FIG. 3, next, in Step SP15, the transmitter 34 transmits the bitstream BS received from the encoding unit 33 to the decoder 2 via the transmission path NW.

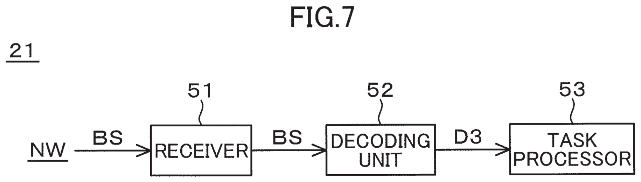

FIG. 7 is a diagram illustrating, in a simplified manner, a configuration of the circuitry 21 included in the decoder 2. The circuitry 21 includes a receiver 51, a decoding unit 52, and a task processor 53.

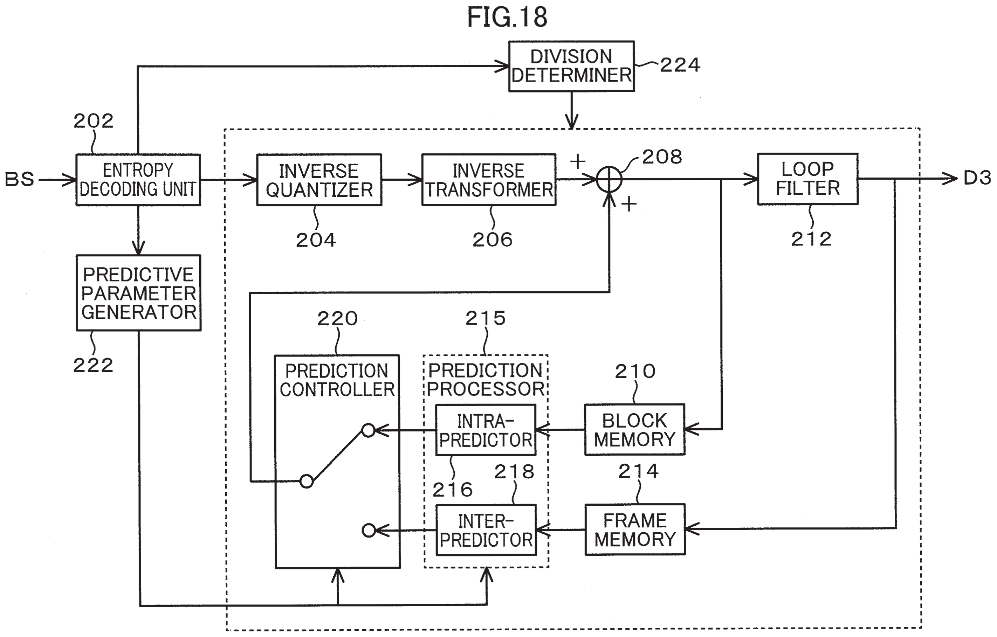

Next, description is on the decoding unit 52 according to the present embodiment. FIG. 18 is a block diagram illustrating one example of a functional configuration of the decoding unit 52 according to the present embodiment. The decoding unit 52 decodes a stream as an encoded image in block units.

As shown in FIG. 18, the decoding unit 52 includes an entropy decoding unit 202, an inverse quantizer 204, an inverse transformer 206, an adder 208, a block memory 210, a loop filter 212, a frame memory 214, an intra-predictor 216, an inter-predictor 218, a prediction controller 220, a predictive parameter generator 222, and a division determiner 224. Note that the intra-predictor 216 and the inter-predictor 218 constitute part of a prediction processor 215.

For example, a plurality of components included in the decoding unit 52 shown in FIG. 18 are implemented by the circuitry 21 and the memory 22 shown in FIG. 1.

The circuitry 21 includes a processor such as a CPU. The circuitry 21 may be a dedicated or general-purpose electronic circuit that decodes a stream, or an assembly of a plurality of electronic circuits. Further, for example, the circuitry 21 may function as a plurality of components except for a component for information storage, out of a plurality of components included in the decoding unit 52 shown in FIG. 18.

The memory 22 may be a dedicated or general-purpose electronic circuit that stores information, or an assembly of a plurality of electronic circuits. The memory 22 may be externally connected to the circuitry 21 or may be incorporated in the circuitry 21. Further, the memory 22 may be a magnetic disk, an optical disk, or the like, or may be expressed as a storage, a recording medium, or the like. Further, the memory 22 may be a nonvolatile memory or a volatile memory.

The memory 22 may store a stream to be decoded or a decoded image. Further, the memory 22 may store a program for stream decoding processing by a processor.

Further, the memory 22 may function as a component for information storage, out of a plurality of components included in the decoding unit 52 shown in FIG. 18. Specifically, the memory 22 may function as the block memory 210 and the frame memory 214 shown in FIG. 18. More specifically, the memory 22 may store a reconstructed image (specifically, a reconstructed block, a reconstructed picture, or the like).

Note that in the decoding unit 52, a part of the plurality of components shown in FIG. 18 may be omitted, and execution of a part of a plurality of types of processing executed by the plurality of components may be omitted. Alternatively, a part of the plurality of components shown in FIG. 18 may be mounted on a different device, and a part of a plurality of types of processing executed by the plurality of components may be executed by a different device.

Each of the inverse quantizer 204, the inverse transformer 206, the adder 208, the block memory 210, the frame memory 214, the intra-predictor 216, the inter-predictor 218, the prediction controller 220, and the loop filter 212 included in the decoding unit 52 shown in FIG. 18 executes processing similarly to that of each of the inverse quantizer 112, the inverse transformer 114, the adder 116, the block memory 118, the frame memory 122, the intra-predictor 124, the inter-predictor 126, the prediction controller 128, and the loop filter 120 included in the encoding unit 33 depicted in FIG. 17.

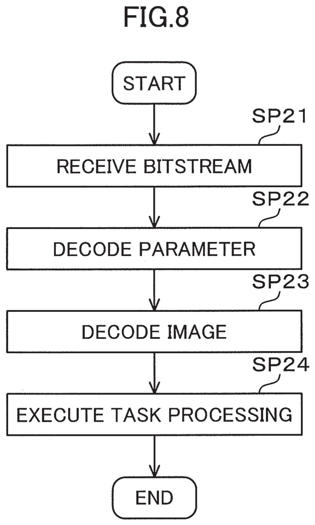

FIG. 8 is a flowchart showing processing executed by the circuitry 21 included in the decoder 2.

First, in Step SP21, the receiver 51 receives the bitstream BS from the encoder 1 via the transmission path NW. The receiver 51 inputs the received bitstream BS to the decoding unit 52.

Next, in Step SP22, the decoding unit 52 decodes the parameter P from the bitstream BS. Referring to FIG. 4, the decoding unit 52 decodes the parameter P₁ from the header region 41 of the first image layer L₁. Further, the decoding unit 52 decodes the parameter P₂ from the header region 41 of the second image layer L₂. Further, the decoding unit 52 decodes the parameter P₃ from the header region 41 of the third image layer L₃. Referring to FIG. 5, in the example of the present embodiment, values of the parameters P₁, P₂, and P₃ are set to "1", "0", and "0", respectively.

Referring to FIG. 8, next, in Step SP23, the decoding unit 52 selects the image layer L based on the parameter P decoded in Step SP22, and decodes the image X from the selected image layer L. In the example of the present embodiment, the decoding unit 52 selects the image layer L₁ in which a value of the parameter P₁ is set to "1", and does not select the image layers L₂ and L₃ in which values of the parameters P₂ and P₃ are set to "0". Therefore, the decoding unit 52 decodes the image X₁ from the selected image layer L₁, and does not decode the images X₂ and X₃ from the image layers L₂ and L₃ that are not selected. The decoding unit 52 inputs image data D3 of the decoded image X₁ to the task processor 53.

Note that, in decoding processing of a bitstream having a multi-layer structure, when an image of an image layer of an upper layer is decoded, an image of an image layer of a lower layer of the upper layer is referred to. Therefore, in a case where the second image layer L₂ is selected, the decoding unit 52 decodes the images X₁ and X₂ and does not decode the image X₃. Further, in a case where the third image layer L₃ is selected, the decoding unit 52 decodes the images X₁ to X₃. However, in a case where correlation of images between the image layers is low, the decoding unit 52 does not need to refer to an image of an image layer of a lower layer when decoding an image of an image layer of an upper layer.

Next, in Step SP24, the task processor 53 executes task processing by using the image X₁ indicated by the image data D3. In the example of the present embodiment, the task processor 53 executes object tracking by using the image X₁.

According to the present embodiment, the parameter P indicates whether or not the image X decoded from the image layer L associated with the parameter P is suitable for predetermined task processing. Therefore, since the decoder 2 can avoid unnecessary decoding based on the parameter P, a processing load of the decoder 2 can be reduced.

Further, the decoder 2 decodes the image X from the image layer L selected based on the parameter P, and executes task processing by using the image X decoded from the image layer L. Therefore, the task processing can be appropriately executed by using the image X suitable for the task processing.

Further, task processing includes machine vision. Therefore, the decoder 2 can appropriately execute machine vision by using the image X suitable for the machine vision.

Further, the task processing includes human vision. Therefore, the decoder 2 can appropriately execute human vision using the image X suitable for human vision.

Further, the parameter P includes a first value and a second value, the first value indicates that the image X decoded from the image layer L is suitable for the task processing, and the second value indicates that the image X decoded from the image layer L is not suitable for the task processing. Therefore, the decoder 2 can be prevented from decoding the image X that is not suitable for the task processing.

Further, the decoder 2 decodes the image X only from the image layer L associated with the parameter P indicating the first value. Therefore, a processing load on the decoder 2 can be further reduced.

Further, the decoder 2 decodes the parameter P from SEI of the header region 41 of the bitstream BS. Therefore, the decoder 2 can easily decode the parameter P.

Further, the parameters P₁ to P₃ associated with the image layers L₁ to L₃ are stored in the header regions 41 of the image layers L₁ to L₃, respectively. Therefore, the decoder 2 can individually acquire the parameters P₁ to P₃ associated with the image layers L₁ to L₃ from the header regions 41 of the respective image layers L₁ to L₃.

With the above configuration, the present disclosure has a possibility of improving accuracy of a machine vision model and reducing a calculation load on the decoder 2. A characteristic of this method is that a multi-layer encoding method is employed. Multi-layer encoding is a method of classifying one video stream into a plurality of layers and performing encoding so that each of the layers has a different piece of video data. Each layer is associated with a different vision task, and these layers collectively function to compress an image. The decoder 2 has flexibility of executing a vision task according to a decoded layer by using an instruction of these vision tasks. Vision tasks such as object detection or object tracking rely on accurate and relevant visual information to perform accurate prediction. For this reason, for such a vision task or human vision, it may be effective to use a high-quality image by including an enhancement layer. On the other hand, for another vision task, it may be sufficient to use only a base layer. For example, a base layer including only ROI is optimized for machine vision and may not be suitable for human vision. On the other hand, an enhancement layer including a residual (non-ROI) or time up-sampling data is suitable for human vision. Therefore, the method of the present disclosure improves accuracy of a machine vision model and saves computing power of the decoder 2.

Hereinafter, various modification examples of the above embodiment will be described. A plurality of modification examples described below can be combined in any manner and applied.

### (First modification example)

Predetermined task processing may include machine vision and human vision. Further, at least one parameter may include the parameter P (first parameter) indicating whether or not the image X decoded from the image layer L is suitable for machine vision and a parameter Q (second parameter) indicating whether or not the image X decoded from the image layer L is suitable for human vision.

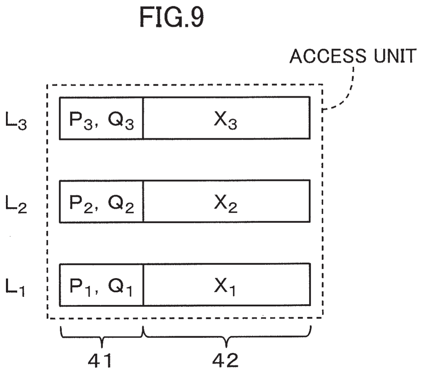

FIG. 9 is a diagram illustrating a part of the bitstream BS having a multi-layer structure in a simplified manner. FIG. 9 illustrates only one access unit. The parameter P includes the parameters P₁ to P₃, and the parameter Q includes parameters Q₁ to Q₃. The setting unit 32 sets the parameters P₁ and Q₁ in association with the first image layer L₁, sets the parameters P₂ and Q₂ in association with the second image layer L₂, and sets the parameters P₃ and Q₃ in association with the third image layer L₃.

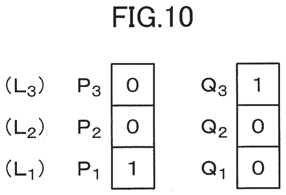

FIG. 10 is a diagram illustrating an example of setting the parameters P and Q by the setting unit 32. According to this example, the setting unit 32 sets values of the parameters P₁, P₂, and P₃ to "1", "0", and "0", respectively, and sets values of the parameters Q₁, Q₂, and Q₃ to "0", "0", and "1", respectively. In this setting example, it is meant that the image X₁ is suitable for object tracking, and the images X₂ and X₃ are not suitable for object tracking. Further, it is meant that the image X₃ (and the images X₁ and X₂ of lower layers) are suitable for human vision.

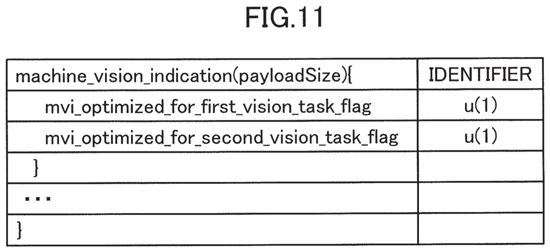

FIG. 11 is a diagram illustrating an example of syntax related to setting of the parameters P and Q. In this example, the parameter P is set as a value of mvi_optimized_for_first_vision_task_flag. In a case where a value of an identifier of the flag is "1", it indicates that the image X encoded into the image layer L associated with the parameter P is suitable for machine vision. In a case where a value of the identifier of the flag is "0", it indicates that the image X encoded into the image layer L associated with the parameter P is not suitable for machine vision.

Further, in this example, the parameter Q is set as a value of mvi_optimized_for_second_vision_task_flag. In a case where a value of an identifier of the flag is "1", it indicates that the image X encoded into the image layer L associated with the parameter Q is suitable for human vision. In a case where a value of the identifier of the flag is "0", it indicates that the image X encoded into the image layer L associated with the parameter Q is not suitable for human vision.

Note that, in a case where the parameter P or the parameter Q is a parameter indicating whether or not it is suitable for human vision, a value indicating that it is suitable for human vision may be set for all image layers in a multi-layer structure. Further, in a case where the parameter P or the parameter Q is a parameter indicating whether or not it is suitable for machine vision, for at least one image layer among a plurality of image layers in a multi-layer structure, a constraint condition may be provided for the setting value such that a value indicating that it is not suitable for the corresponding machine vision is set in one parameter and a value indicating that it is suitable for the corresponding machine vision is set in the other parameter.

According to the present modification example, at least one parameter includes the parameter P indicating whether or not the image X is suitable for machine vision and the parameter Q indicating whether or not the image X is suitable for human vision. Therefore, the decoder 2 can appropriately execute machine vision by using the image X suitable for machine vision based on the parameters P and Q, and can appropriately execute human vision by using the image X suitable for human vision.

### (Second modification example)

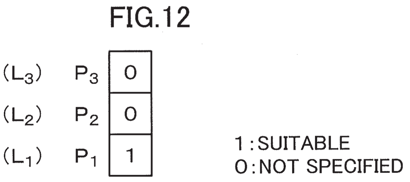

FIG. 12 is a diagram illustrating a first setting example of the parameter P by the setting unit 32. The setting unit 32 sets values of the parameters P₁ to P₃ to "1" (first value) or "0" (second value). The value "1" of the parameter P indicates that the image X encoded into the image layer L is suitable for task processing. The value "0" of the parameter P indicates that whether or not the image X encoded into the image layer L is suitable for task processing is not specified.

According to the first setting example, the decoder 2 that receives the bitstream BS can optionally determine whether or not to decode the image X from the image layer L associated with the parameter P indicating the second value according to a status of a processing load or the like.

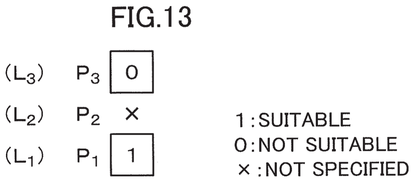

FIG. 13 is a diagram illustrating a second setting example of the parameter P by the setting unit 32. The setting unit 32 sets values of the parameters P₁ and P₃ to "1" or "0". Further, the setting unit 32 does not associate the parameter P₂ with the image layer L₂. The value "1" of the parameter P indicates that the image X encoded into the image layer L is suitable for task processing. The value "0" of the parameter P indicates that the image X encoded into the image layer L is not suitable for task processing. That the parameter P is not associated with the image layer L indicates that whether or not the image X encoded into the image layer L is suitable for task processing is not specified.

According to the second setting example, the decoder 2 that receives the bitstream BS can optionally determine whether or not to decode the image X from the image layer L not associated with the parameter P according to a status of a processing load or the like.

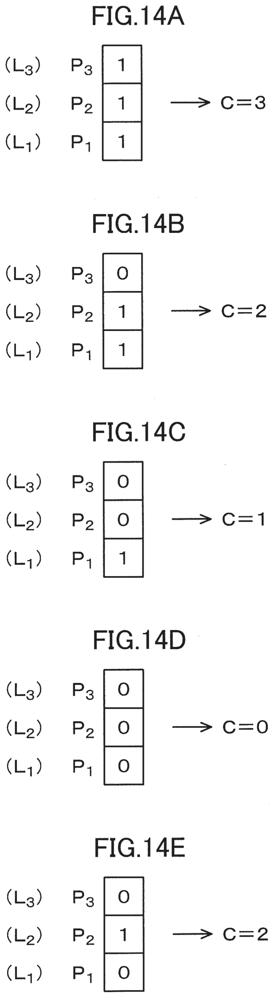

FIGS. 14A to 14E are diagrams for describing an example of a processing method for controlling an image layer to be decoded by the decoder 2 that receives the bitstream BS according to a status of a processing load or the like. The decoder 2 counts the number of image layers that need to be decoded in order from the first image layer L₁ that is a lowest layer, and identifies an image layer that needs to be decoded according to a count value C.

As illustrated in FIG. 14A, in a case where values of the parameters P₁, P₂, and P₃ are "1", "1", and "1", respectively, the count value C is "3". As illustrated in FIG. 14B, in a case where values of the parameters P₁, P₂, and P₃ are "1", "1", and "0", respectively, the count value C is "2". As illustrated in FIG. 14C, in a case where values of the parameters P₁, P₂, and P₃ are "1", "0", and "0", respectively, the count value C is "1". As illustrated in FIG. 14D, in a case where values of the parameters P₁, P₂, and P₃ are "0", "0", and "0", respectively, the count value C is "0". As illustrated in FIG. 14E, in a case where values of the parameters P₁, P₂, and P₃ are "0", "1", and "0", respectively, the count value C is "2".

By performing the above processing, it is possible to simply express the number of image layers that require decoding in order from the first image layer L₁ that is a lowest layer in the decoder 2, and thus, it is possible to simplify control for determining an image layer to be decoded according to a status of a processing load or the like.

### (Third modification example)

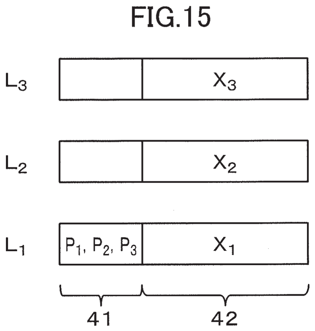

FIG. 15 is a diagram illustrating, in a simplified manner, a part of the bitstream BS having a multi-layer structure. FIG. 15 illustrates only one access unit.

The encoding unit 33 collectively stores all of a plurality of the parameters P₁ to P₃ associated with a plurality of the image layers L₁ to L₃ in the header region 41 of the first image layer L₁ that is a base layer.

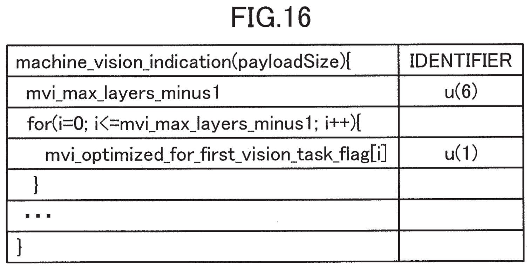

FIG. 16 is a diagram illustrating an example of syntax related to setting of the parameter P. In this example, the parameter P is set as a value of mvi_optimized_for_first_vision_task_flag [i] in an SEI message by using a parameter i indicating the number of layers of the image layers L.

According to the present modification example, the decoder 2 that receives the bitstream BS can collectively acquire all the parameters P₁ to P₃ associated with all the image layers L₁ to L₃ from the header region 41 of a base layer.

Note that the encoder 1 stores the parameters P₁ to P₃ in a base layers of all access units constituting the bitstream BS. However, the encoder 1 may store the parameters P₁ to P₃ only in a base layer of a first access unit constituting the bitstream BS. In this case, setting content of the parameters P₁ to P₃ in the first access unit is also inherited by second and subsequent access units. Further, the encoder 1 may store the parameters P₁ to P₃ only in a base layer of an intermediate access unit constituting the bitstream BS. In this case, whether or not an encoded image is suitable for task processing is not specified for access units from the first access unit to an access unit immediately before the intermediate access unit, and setting content of the parameters P₁ to P₃ in the intermediate access unit is inherited by the intermediate access unit and subsequent access units.

Further, the encoding unit 33 may collectively store some of a plurality of parameters P₁ to P₃ associated with a plurality of the image layers L₁ to L₃ in the header region 41 of the first image layer L₁. For example, the encoding unit 33 stores the parameters P₁ and P₂ in the header region 41 of the first image layer L₁, and stores the parameter P₃ in the header region 41 of the third image layer L₃.

Further, the encoding unit 33 may collectively store a plurality of the parameters P₁ to P₃ associated with a plurality of the image layers L₁ to L₃ in the header region 41 of the first image layer L₁ as independent SEI messages each having the syntax configuration described in FIG. 6 or 11. At that time, a scalable nesting (SN)_SEI message may be used to collectively store SEI messages of a plurality of the image layers L₁ to L₃ in one header region.

### Industrial Applicability

The present disclosure is particularly useful for application to an image processing system including an encoder that encodes an image into a bitstream and transmits the bitstream, and a decoder that decodes an image from a received bitstream.

## Claims

1. A decoder comprising:
circuitry; and
a memory coupled to the circuitry,
wherein the circuitry decodes, from a bitstream having a multi-layer structure including at least one image layer, at least one parameter associated with the image layer, and
the parameter indicates whether or not an image decoded from an image layer associated with the parameter is suitable for a specific task processing.

2. The decoder according to claim 1, wherein
the circuitry further:
decodes an image from an image layer selected based on the parameter from the at least one image layer; and
executes the task processing by using the image decoded from the image layer.

3. The decoder according to claim 1, wherein the task processing includes machine vision.

4. The decoder according to claim 1, wherein the task processing includes human vision.

5. The decoder according to claim 1, wherein
the task processing includes machine vision and human vision, and
the at least one parameter includes a first parameter indicating whether or not an image decoded from the image layer is suitable for the machine vision, and a second parameter indicating whether or not an image decoded from the image layer is suitable for the human vision.

6. The decoder according to claim 1, wherein
the parameter includes a first value and a second value,
the first value indicates that an image decoded from the image layer is suitable for the task processing, and
the second value indicates that an image decoded from the image layer is not suitable for the task processing.

7. The decoder according to claim 1, wherein
the parameter includes a first value and a second value,
the first value indicates that an image decoded from the image layer is suitable for the task processing, and
the second value indicates that whether or not an image decoded from the image layer is suitable for the task processing is unspecified.

8. The decoder according to claim 6 or 7, wherein
the circuitry further:
decodes an image from only an image layer associated with the parameter indicating the first value among the at least one image layer; and
executes the task processing by using the image decoded from the image layer.

9. The decoder according to claim 1, wherein
the at least one image layer includes an image layer with which the parameter is not associated, and
that the parameter is not associated with the image layer indicates that whether or not an image decoded from the image layer is suitable for the task processing is unspecified.

10. The decoder according to claim 1, wherein
the circuitry decodes the at least one parameter from a predetermined header region of the bitstream, and
the predetermined header region includes SEI.

11. The decoder according to claim 10, wherein
the at least one image layer includes a base layer that is a lowermost layer of the multi-layer structure, and
the at least one parameter associated with the at least one image layer is stored in the header region of the base layer.

12. The decoder according to claim 10, wherein the at least one parameter associated with the at least one image layer is stored in the header region of each of the at least one image layer.

13. An encoder comprising:
circuitry; and
a memory connected to the circuitry,
wherein the circuitry encodes, into a bitstream having a multi-layer structure including at least one image layer, at least one parameter associated with the image layer, and
the parameter indicates whether or not an image in an image layer associated with the parameter is suitable for a specific task processing.

14. The encoder according to claim 13, wherein the task processing includes machine vision.

15. The encoder according to claim 13, wherein the task processing includes human vision.

16. The encoder according to claim 13, wherein
the task processing includes machine vision and human vision, and
the at least one parameter includes a first parameter indicating whether or not an image in the image layer is suitable for the machine vision, and a second parameter indicating whether or not an image in the image layer is suitable for the human vision.

17. The encoder according to claim 13, wherein
the parameter includes a first value and a second value,
the first value indicates that an image in the image layer is suitable for the task processing, and
the second value indicates that an image in the image layer is not suitable for the task processing.

18. The encoder according to claim 13, wherein
the parameter includes a first value and a second value,
the first value indicates that an image in the image layer is suitable for the task processing, and
the second value indicates that whether or not an image in the image layer is suitable for the task processing is unspecified.

19. The encoder according to claim 13, wherein
the at least one image layer includes an image layer with which the parameter is not associated, and
that the parameter is not associated with the image layer indicates that whether or not an image in the image layer is suitable for the task processing is unspecified.

20. The encoder according to claim 13, wherein
the circuitry encodes the at least one parameter into a predetermined header region of the bitstream, and
the predetermined header region includes SEI.

21. The encoder according to claim 20, wherein
the at least one image layer includes a base layer that is a lowermost layer of the multi-layer structure, and
the at least one parameter associated with the at least one image layer is stored in the header region of the base layer.

22. The encoder according to claim 20, wherein the at least one parameter associated with the at least one image layer is stored in the header region of each of the at least one image layer.

23. A decoding method performed by a decoder, the method comprising:
decoding, from a bitstream having a multi-layer structure including at least one image layer, at least one parameter associated with the image layer, wherein
the parameter indicates whether or not an image decoded from an image layer associated with the parameter is suitable for a specific task processing.

24. An encoding method performed by an encoder, the method comprising:
encoding, into a bitstream having a multi-layer structure including at least one image layer, at least one parameter associated with the image layer, wherein
the parameter indicates whether or not an image in an image layer associated with the parameter is suitable for a specific task processing.
